# EUROPEAN PATENT APPLICATION

(11) **EP 4 661 446 A1**
(43) Date of publication of application: **10.12.2025**
(21) Application number: 24763142.7
(22) Date of filing: 27.02.2024
(51) Int. Cl.: H04W 4/60, H04W 12/06

(54) **ESIM CARD REGISTRATION METHOD AND APPARATUS**

(30) Priority: 28.02.2023 CN 202310179686
(71) Applicant: Huawei Cloud Computing Technologies Co., Ltd., Guiyang, Guizhou 550025 (CN)
(72) Inventor: NIE, Yanling, Guiyang, Guizhou 550025 (CN); PAN, Huimin, Guiyang, Guizhou 550025 (CN); GUO, Bin, Guiyang, Guizhou 550025 (CN)
(74) Representative: Goddar, Heinz J.
(86) International application number: PCT/CN2024/078795
(87) International publication number: WO 2024/179461

(57) **Abstract**

This application discloses a registration method and apparatus for an ESIM card, and belongs to the field of terminal technologies. The ESIM card is configured in a terminal. The method is applied to a registration node. The method includes: The registration node obtains a configuration identifier of the ESIM card, where the configuration identifier is obtained based on a profile of the ESIM card, and the ESIM card is obtained by performing configuration based on the profile; the registration node obtains a password of the ESIM card, where the password is generated in a use process of the terminal; and the registration node registers the ESIM card when the configuration identifier matches the password. This application can ensure registration security of the ESIM card.

## Description

This application claims priority to Chinese Patent Application No. 202310179686.4, filed on February 28, 2023 and entitled "REGISTRATION METHOD AND APPARATUS FOR ESIM CARD", which is incorporated herein by reference in its entirety.

### TECHNICAL FIELD

This application relates to the field of terminal technologies, and in particular, to a registration method and apparatus for an ESIM card.

### BACKGROUND

Before a terminal (for example, an internet of things device) uses an ESIM card to communicate with a remote server (for example, a server of an internet of things platform), the ESIM card needs to first register with the remote server. Before the remote server registers the ESIM card, the remote server needs to first perform authentication on the ESIM card, to ensure validity of the ESIM card. In addition, the remote server registers the ESIM card when authentication on the ESIM card succeeds.

Currently, to help the remote server verify whether the ESIM card is valid, the remote server needs to pre-store an account and a password of the terminal. When verifying whether the ESIM card is valid, the remote server determines whether the pre-stored account and password correspondingly match an account and a password that are sent by the ESIM card in a registration process, and when the accounts and the passwords correspondingly match, determines that the ESIM card is valid. The password of the terminal is burnt into the terminal by a terminal manufacturer in a preparation process of the terminal.

However, currently, the password burnt by the terminal manufacturer is insecure. Consequently, security of password-based authentication is low. Accordingly, registration security of the ESIM card is low.

### SUMMARY

This application provides a registration method and apparatus for an ESIM card. This application can ensure registration security of the ESIM card. Technical solutions provided in this application are as follows.

According to a first aspect, this application provides a registration method for an embedded subscriber identity module ESIM card. The ESIM card is configured in a terminal. The method is applied to a registration node. The method includes: The registration node obtains a configuration identifier of the ESIM card, where the configuration identifier is obtained based on a profile of the ESIM card, and the ESIM card is obtained by performing configuration based on the profile; the registration node obtains a password of the ESIM card, where the password is generated in a use process of the terminal; and the registration node registers the ESIM card when the configuration identifier matches the password.

The ESIM card is obtained by performing configuration based on the profile, and different ESIM cards have different profiles. Therefore, the configuration identifier obtained based on the profile can uniquely identify the ESIM card. In addition, a probability that the profile is leaked is low. Therefore, when the configuration identifier is obtained based on the profile of the ESIM card, security of the configuration identifier can be effectively ensured. The configuration identifier can uniquely identify the ESIM card, and the configuration identifier has high security. Therefore, when authentication is performed on the ESIM card based on the configuration identifier, authentication security can be ensured, to ensure registration security of the ESIM card, and prevent a device from being forged. In addition, because the password is generated in the use process of the terminal, a terminal manufacturer does not need to burn the password for the terminal. This reduces difficulty of producing the terminal by the terminal manufacturer, and eliminates a security risk existing in burning of the password by the terminal manufacturer.

In an implementation, that the registration node obtains the configuration identifier of the ESIM card includes: The registration node obtains the configuration identifier from a configuration node, where the configuration node is configured to provide the profile for the ESIM card.

In an implementation, that the registration node obtains the password of the ESIM card includes: The registration node receives a registration request sent by the terminal, and obtains the password carried in the registration request.

Optionally, the terminal is an internet of things device, and the registration node is deployed in an internet of things management system.

According to a second aspect, this application provides a registration method for an ESIM card. The ESIM card is configured in a terminal. The method is applied to a configuration node. The method includes: The configuration node generates a configuration identifier of the ESIM card based on a profile of the ESIM card, where the ESIM card is obtained by performing configuration based on the profile; and the configuration node provides the configuration identifier for a registration node.

In an implementation, the configuration identifier may be obtained based on performing a preset algorithm on the profile. For example, the configuration identifier may be obtained based on performing a hash algorithm on the profile. For example, the configuration identifier may be a hash value of the profile.

Optionally, before the configuration node generates the configuration identifier of the ESIM card based on the profile of the ESIM card, the method further includes: The configuration node sends the profile of the ESIM card to the terminal.

Optionally, the terminal is an internet of things device, and the registration node is deployed in an internet of things management system or an ESIM card management system.

According to a third aspect, this application provides a registration method for an ESIM card. The ESIM card is configured in a terminal. The method is applied to the terminal. The method includes: The terminal obtains a password of the ESIM card, where the password is generated in a use process of the terminal; and the terminal provides the password for a registration node.

Optionally, before the terminal obtains the password of the ESIM card, the method further includes: The terminal receives a profile sent by a configuration node; and the terminal performs, based on the profile, configuration to obtain the ESIM card.

When the ESIM card is obtained by performing configuration based on the profile, the password is obtained based on the profile. In an implementation, the password may be obtained based on performing a preset algorithm on the profile. For example, the password may be obtained based on performing a hash algorithm on the profile. For example, the password may be a hash value of the profile.

Optionally, the terminal is an internet of things device.

According to a fourth aspect, this application provides a registration apparatus for an embedded subscriber identity module ESIM card. The ESIM card is configured in a terminal. The apparatus is used in a registration node. The apparatus includes: an obtaining module, configured to obtain a configuration identifier of the ESIM card, where the configuration identifier is obtained based on a profile of the ESIM card, the ESIM card is obtained by performing configuration based on the profile, and the obtaining module is further configured to obtain a password of the ESIM card, where the password is generated in a use process of the terminal; and a registration module, configured to register the ESIM card when the configuration identifier matches the password.

Optionally, the obtaining module is specifically configured to obtain the configuration identifier from a configuration node, where the configuration node is configured to provide the profile for the ESIM card.

Optionally, the obtaining module is specifically configured to: receive a registration request sent by the terminal, and obtain the password carried in the registration request.

Optionally, the terminal is an internet of things device, and the registration node is deployed in an internet of things management system.

According to a fifth aspect, this application provides a registration apparatus for an ESIM card. The ESIM card is configured in a terminal. The apparatus is used in a configuration node. The apparatus includes: a generation module, configured to generate a configuration identifier of the ESIM card based on a profile of the ESIM card, where the ESIM card is obtained by performing configuration based on the profile; and a sending module, configured to provide the configuration identifier for a registration node.

Optionally, the configuration identifier is obtained based on a hash value of the profile.

Optionally, the sending module is further configured to send the profile of the ESIM card to the terminal.

Optionally, the terminal is an internet of things device, and the configuration node is deployed in an internet of things management system or an ESIM card management system.

According to a sixth aspect, this application provides a registration apparatus for an ESIM card. The ESIM card is configured in a terminal. The apparatus is used in the terminal. The apparatus includes: an obtaining module, configured to obtain a password of the ESIM card, where the password is generated in a use process of the terminal; and a sending module, configured to provide the password for a registration node.

Optionally, the apparatus further includes: a receiving module, configured to receive a profile sent by a configuration node; and a configuration module, configured to perform, based on the profile, configuration to obtain the ESIM card.

Optionally, the password is obtained based on the profile.

Optionally, the password is obtained based on a hash value of the profile.

Optionally, the terminal is an internet of things device.

According to a seventh aspect, this application provides a computing device, including a memory and a processor. The memory stores program instructions. The processor runs the program instructions to perform the method according to any one of the first aspect, the second aspect, the third aspect, and the possible implementations of the first aspect, the second aspect, and the third aspect in this application.

According to an eighth aspect, this application provides a computing device cluster, including a plurality of computing devices. The plurality of computing devices include a plurality of processors and a plurality of memories. The plurality of memories store program instructions. The plurality of processors run the program instructions, to enable the computing device cluster to perform the method according to any one of the first aspect, the second aspect, the third aspect, and the possible implementations of the first aspect, the second aspect, and the third aspect in this application.

According to a ninth aspect, this application provides a computer-readable storage medium. The computer-readable storage medium is a non-volatile computer-readable storage medium. The computer-readable storage medium includes program instructions. When the program instructions are run on a computing device, the computing device is enabled to perform the method according to any one of the first aspect, the second aspect, the third aspect, and the possible implementations of the first aspect, the second aspect, and the third aspect in this application.

According to a tenth aspect, this application provides a computer program product including instructions. When the computer program product runs on a computer, the computer is enabled to perform the method according to any one of the first aspect, the second aspect, the third aspect, and the possible implementations of the first aspect, the second aspect, and the third aspect in this application.

### BRIEF DESCRIPTION OF DRAWINGS

FIG. 1 is a diagram of an implementation environment related to registration of an ESIM card according to an embodiment of this application;
FIG. 2 is a diagram of obtaining a profile of an ESIM card according to an embodiment of this application;
FIG. 3 is a flowchart of registration of an ESIM card according to an embodiment of this application;
FIG. 4 is a diagram of communication between an ESIM and a registration node according to an embodiment of this application;
FIG. 5 is a diagram of a registration apparatus for an ESIM card according to an embodiment of this application;
FIG. 6 is a diagram of another registration apparatus for an ESIM card according to an embodiment of this application;
FIG. 7 is a diagram of still another registration apparatus for an ESIM card according to an embodiment of this application;
FIG. 8 is a diagram of yet another registration apparatus for an ESIM card according to an embodiment of this application;
FIG. 9 is a diagram of a structure of a computing device according to an embodiment of this application; and
FIG. 10 is a diagram of a structure of a computing device cluster according to an embodiment of this application.

### DESCRIPTION OF EMBODIMENTS

To make objectives, technical solutions, and advantages of this application clearer, the following further describes implementations of this application in detail with reference to accompanying drawings.

Currently, to help a remote server verify whether an ESIM card is valid, the remote server needs to pre-store an account and a password of a terminal. When verifying whether the ESIM card is valid, the remote server determines whether the pre-stored account and password correspondingly match an account and a password that are sent by the ESIM card in a registration process, and when the accounts and the passwords correspondingly match, determines that the ESIM card is valid. The password of the terminal is burnt into the terminal by a terminal manufacturer in a preparation process of the terminal.

However, because the terminal manufacturer needs to burn an identification number (for example, a media access control (media access control, MAC) address) for the terminal, and the identification number is used to uniquely identify the terminal, if the terminal manufacturer further needs to burn a unique password for the terminal, this cannot be implemented by existing production lines of many terminal manufacturers. As a result, the password burnt by the terminal manufacturer for the terminal is not unique and secure. For example, currently, the password burnt by the terminal manufacturer for the terminal is obtained using an algorithm and based on the identification number of the terminal, or the terminal manufacturer burns a same password for all terminals of a same model. Because the identification number is easily obtained, the password is easily forged when the password is obtained based on the identification number. The password is easily leaked when the terminals of the same model have the same password. For example, if the password of the terminal is set in a current manner, after a hacker purchases the terminal, the hacker can easily guess an identification number and a password of another terminal by using the identification number and the password of the terminal and based on a feature that identification numbers of different terminals are continuous, forge a terminal based on the guessed identification number and password, and use the forged terminal to connect to the remote server and attack the remote server. As a result, currently, security of the password of the terminal is low. Consequently, security of password-based authentication is low. Accordingly, registration security of the ESIM card is low.

Embodiments of this application provide a registration method for an embedded subscriber identity module (embedded subscriber identity module, ESIM) card. The embedded subscriber identity module card is also referred to as an embedded subscriber identification module card. The ESIM card is an electronic SIM card. The ESIM card is configured in a terminal. The method is applied to a registration node. The method includes: The registration node separately obtains a configuration identifier of the ESIM card and a password of the ESIM card, and then determines whether the configuration identifier matches the password; and when the configuration identifier matches the password, the registration node determines that authentication on the ESIM card succeeds, and registers the ESIM card. The ESIM card is obtained by performing configuration based on a profile, and different ESIM cards have different profiles. Therefore, the configuration identifier obtained based on the profile can uniquely identify the ESIM card. In addition, a probability that the profile is leaked is low. Therefore, when the configuration identifier is obtained based on the profile of the ESIM card, security of the configuration identifier can be effectively ensured. The configuration identifier can uniquely identify the ESIM card, and the configuration identifier has high security. Therefore, when authentication is performed on the ESIM card based on the configuration identifier, authentication security can be ensured, to ensure registration security of the ESIM card. In addition, because the password is generated in a use process of the terminal, a terminal manufacturer does not need to burn the password for the terminal. This reduces difficulty of producing the terminal by the terminal manufacturer, and eliminates a security risk caused by burning of the password by the terminal manufacturer.

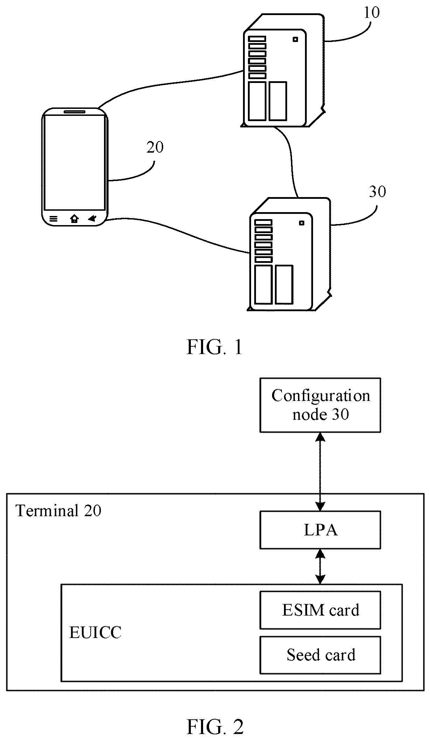

FIG. 1 is a diagram of a structure of an implementation environment related to the registration method for an ESIM card according to an embodiment of this application. As shown in FIG. 1, the implementation environment includes a registration node 10, a terminal 20, and a configuration node 30. The terminal 20 can establish a communication connection to the configuration node 30. The terminal 20 can also establish a communication connection to the registration node 10. The configuration node 30 can establish a communication connection to the registration node 10. For example, the communication connections may be established between the terminal 20 and the configuration node 30, between the terminal 20 and the registration node 10, and between the configuration node 30 and the registration node 10 through a network. Optionally, the network may be a local area network, an internet, or another network. This is not limited in embodiments of this application.

The ESIM card is configured in the terminal 20. The terminal 20 may communicate with another device via the ESIM. In an implementation, the ESIM card may be obtained by performing configuration based on a profile. There is a one-to-one correspondence between a profile and an ESIM card. The profile indicates card information of the ESIM card. For example, the profile may indicate a card identifier of the ESIM card, information required by the ESIM card to access the internet, and related information of an operator (for example, China Mobile, China Unicom, or China Telecom) that provides the network for the ESIM card. A process of performing, based on the profile, configuration to obtain the ESIM card may be considered as a process of obtaining the card information of the ESIM card from the profile.

In an implementation scenario, the profile may be provided by the configuration node 30 for the terminal 20. For example, as shown in FIG. 2, before delivery of the terminal 20, a seed card is built in the terminal 20. The seed card may establish a communication connection to the configuration node 30 through the network. The configuration node 30 may send the profile to the terminal 20 through the communication connection. After obtaining the profile, the terminal 20 performs configuration in the terminal 20 using the profile, to obtain the ESIM card. Optionally, the seed card may alternatively be an embedded card. In this case, both the seed card and the ESIM card may be configured in an embedded universal integrated circuit card (embedded universal integrated circuit card, EUICC). It should be noted that the profile of the ESIM card may alternatively be obtained in another manner. For example, the profile may be obtained by transmitting the profile to the terminal using a USB flash drive, or the profile may be obtained by the terminal by scanning a two-dimensional code that carries the card information of the ESIM card, or may be obtained in another manner. Examples are not enumerated one by one for the another manner in this embodiment of this application. The ESIM card is obtained by performing configuration based on the profile. Therefore, the ESIM card may be configured by replacing the profile and using a replaced profile, to change the operator of the ESIM card, without replacing a hardware device related to the ESIM card.

The terminal 20 may be a computer, a personal computer, a laptop computer, a mobile phone, a smartphone, a tablet computer, a cloud host, a portable mobile terminal 20, a multimedia player, an e-book reader, a wearable device, a smart home appliance, an artificial intelligence device, a smart wearable device, a smart vehicle-mounted device, an internet of things device, or the like.

The configuration node 30 can provide profiles for all terminals 20 that establish connections to the configuration node 30, so that the terminals 20 perform, based on the obtained profiles, configuration to obtain ESIM cards. A function of the configuration node 30 to provide the profile may be abstracted as a configuration service. It should be understood that the configuration service is an example for description, and does not constitute a limitation on a service of the function of the configuration node 30 to provide the profile. A person of ordinary skill in the art may learn that, as an application scenario changes, a name of the service may change. For example, in some scenarios, when the configuration node 30 provides the profile using an over the air (over the air, OTA) technology, the name of the service may alternatively be an over the air card writing service or an over the air ESIM card writing service. Names of the service are not enumerated one by one in this embodiment of this application. Optionally, the configuration node 30 may be one server or a server cluster including several servers, or may be a cloud computing service center. A large quantity of basic resources of a cloud service provider are deployed in the cloud computing service center. The configuration node is deployed in an internet of things management system or an ESIM card management system. For example, computing resources, storage resources, and network resources are deployed in the cloud computing service center. The cloud computing service center may use the large quantity of basic resources to implement the function of the configuration node 30 in the registration method for an ESIM card provided in this embodiment of this application. In this case, the configuration node 30 may be deployed on a cloud platform, and the cloud platform has the function of providing the profile for the terminal 20.

The registration node 10 is configured to register the ESIM card in the terminal 20, so that the terminal 20 performs communication via the registered ESIM card. Before registering for the terminal 20, the registration node 10 may first perform authentication on the ESIM card. The registration node 10 registers the ESIM card only after authentication on the ESIM card succeeds. Optionally, the registration node 10 may be one server or a server cluster including several servers, or may be a cloud computing service center. A large quantity of basic resources of the cloud service provider are deployed in the cloud computing service center. For example, computing resources, storage resources, and network resources are deployed in the cloud computing service center. The cloud computing service center may use the large quantity of basic resources to implement a function of the registration node 10 in the registration method for an ESIM card provided in this embodiment of this application. In this case, the registration node 10 may be deployed on a cloud platform, and the cloud platform has the function of registering the ESIM card. In addition, when the terminal 20 is an internet of things device, the registration node 10 may be specifically deployed in an internet of things management system that manages the internet of things device.

It should be noted that the configuration node 30 and the registration node 10 may be deployed in a same system, or may be respectively deployed in different systems. For example, both the configuration node 30 and the registration node 10 may be deployed in the registration management system. It should be further noted that the configuration node 30 and the registration node 10 may alternatively be implemented via another resource platform other than the cloud platform. This is not specifically limited in embodiments of this application. In this case, the configuration node 30 and the registration node 10 may be implemented using resources on the another resource platform, and implement corresponding functions.

It should be understood that the foregoing content is an example for description of an application scenario of the registration method for an ESIM card provided in embodiments of this application, and does not constitute a limitation on the application scenario of the registration method for an ESIM card. A person of ordinary skill in the art may learn that, as a service requirement changes, the application scenario of the registration method for an ESIM card may be adjusted based on an application requirement. Application scenarios of the registration method for an ESIM card are not enumerated one by one in this embodiment of this application.

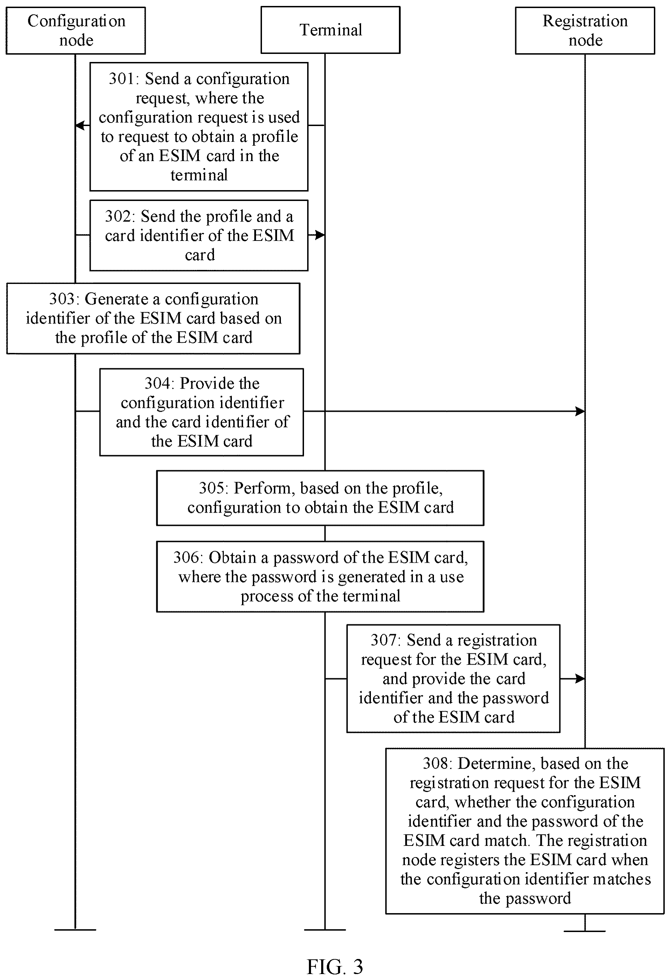

The following describes the registration method for an ESIM card provided in embodiments of this application. As shown in FIG. 3, the registration method for an ESIM card includes the following steps.

Step 301: A terminal sends a configuration request to a configuration node, where the configuration request is used to request to obtain a profile of an ESIM card in the terminal.

When needing configuration of the ESIM card, the terminal may send the configuration request to the configuration node, to obtain the profile from the configuration node, and perform, based on the profile, configuration to obtain the ESIM card. For example, after delivery of the terminal, the terminal may send the configuration request to the configuration node after being initialized and powered on, to request to obtain the profile, and implement initial configuration of the ESIM card based on the profile. Alternatively, after initial configuration of the ESIM card is completed, if the terminal needs to switch the ESIM card to a different operator, that is, to change the ESIM card, the terminal may send the configuration request to the configuration node, to request to obtain a new profile, and reconfigure the ESIM card based on the new profile, so as to change the ESIM card.

In an implementation, the operation of sending, by the terminal, the configuration request to the configuration node may be implemented via a seed card in the terminal. For example, as shown in FIG. 2, before delivery of the terminal, the seed card is built in the terminal, and the seed card may establish a communication connection to the configuration node through a network, and send the configuration request to the configuration node through the communication connection. Optionally, the seed card may be an embedded card. Both the seed card and ESIM card may be configured in an EUICC. To facilitate communication between the seed card and the configuration node, the EUICC may be configured with an address of the configuration node. In addition, as shown in FIG. 2, a local profile assistant (local profile assistant, LPA) may be configured in the terminal, and communication between the EUICC and the configuration node may be implemented via the LPA. For example, an implementation in which the seed card sends the configuration request to the configuration node may be as follows: The seed card sends the configuration request to the LPA, and the LPA forwards the configuration request to the configuration node. The LPA can also manage the profile of the ESIM card, to serve as a bridge between the configuration node and the EUICC.

The configuration request may indicate a card identifier of the ESIM card, or may not indicate the card identifier of the ESIM card. For example, the terminal may specify the card identifier of the ESIM card. In this case, the configuration request may carry the specified card identifier. When the terminal does not need to specify the card identifier of the ESIM card, the configuration request may not carry the card identifier.

Step 302: The configuration node sends the profile and the card identifier of the ESIM card to the terminal based on the configuration request.

After receiving the configuration request, the configuration node may send the profile and the card identifier of the ESIM card to the terminal, so that the terminal performs, based on the profile and the card identifier, configuration to obtain the ESIM card. In an implementation, that the configuration node sends the profile and the card identifier to the terminal may be implemented by sending, by the configuration node, the profile and the card identifier to the seed card. Similarly, when the LPA is configured in the terminal, an implementation in which the configuration node sends the profile and the card identifier to the seed card may be as follows: The configuration node sends the profile and the card identifier to the LPA, and the LPA forwards the profile and the card identifier to the seed card.

It can be learned from the foregoing descriptions that the configuration request may carry or may not carry the card identifier of the ESIM card. When the configuration request carries the card identifier of the ESIM card, the configuration node may determine the card identifier as the card identifier of the ESIM card. When the configuration request does not carry the card identifier of the ESIM card, the configuration node may select, from a card identifier for which the configuration node has permission for configuration, a card identifier as the card identifier of the ESIM card. It should be noted that, to ensure security of the profile and the card identifier, the configuration node may further perform a security verification operation before sending the profile and the card identifier to the ESIM card, to ensure that the profile and the card identifier are not abused.

It should be noted that step 301 and step 302 are examples of implementations in which the terminal obtains the profile, and are not used to limit the implementations in which the terminal obtains the profile. For example, the profile may alternatively be obtained by transmitting the profile to the terminal via a USB flash drive, or the profile may be obtained by the terminal by scanning a two-dimensional code that carries card information of the ESIM card, or the terminal may obtain the profile in another manner. Manners are not enumerated one by one in this embodiment of this application.

Step 303: The configuration node generates a configuration identifier of the ESIM card based on the profile of the ESIM card.

After providing the profile for the ESIM card, the configuration node may generate the configuration identifier of the ESIM card based on the profile, so that a registration node performs authentication on the ESIM card based on the configuration identifier. In an implementation, the configuration identifier may be obtained based on performing a preset algorithm on the profile. For example, the configuration identifier may be obtained based on performing a hash algorithm on the profile. For example, the configuration identifier may be a hash value of the profile.

Step 304: The configuration node provides the configuration identifier and the card identifier of the ESIM card for the registration node.

After obtaining the configuration identifier and the card identifier of the ESIM card, the configuration node may provide the configuration identifier and the card identifier for the registration node, so that the registration node performs authentication on the ESIM card based on the configuration identifier and the card identifier. Optionally, after obtaining the configuration identifier and the card identifier, the configuration node may spontaneously provide the configuration identifier and the card identifier for the registration node. In an implementation of this case, the configuration node may determine, based on a preset correspondence between a registration node and an ESIM card, the registration node configured to receive the configuration identifier and the card identifier. Alternatively, the configuration node may send the configuration identifier and the card identifier to the registration node after receiving an obtaining request from the registration node. In an implementation of this case, after receiving a registration request sent by the ESIM card, the registration node may send the obtaining request to the configuration node, to request the configuration node to provide the configuration identifier and the card identifier of the ESIM card for the registration node. The registration request is used to request the registration node to register the ESIM card. Optionally, in this case, the obtaining request may carry the card identifier of the ESIM card. In this case, the configuration node may not provide the card identifier of the ESIM card for the registration node.

Step 305: The terminal performs, based on the profile, configuration to obtain the ESIM card.

After receiving the profile sent by the configuration node, the terminal may perform, based on the profile, configuration to obtain the ESIM card. For example, the profile may indicate information such as the card identifier of the ESIM card, information required by the ESIM card to access the internet, and related information of an operator (for example, China Mobile, China Unicom, or China Telecom) that provides a network for the ESIM card. That the terminal performs configuration based on the profile includes: The terminal sets, as the card identifier of the ESIM card, the card identifier indicated by the profile, and the terminal sets an internet access configuration of the terminal based on the information that is indicated by the profile and required for the ESIM card to access the internet and the related information of the operator that provides the network for the ESIM card, so that the ESIM card can use the network based on the indication of the profile.

Step 306: The terminal obtains a password of the ESIM card, where the password is generated in a use process of the terminal.

When the password of the ESIM card is generated in the use process of the terminal, a terminal manufacturer does not need to burn the password for the terminal. This reduces difficulty of producing the terminal by the terminal manufacturer, and eliminates a security risk caused by burning of the password by the terminal manufacturer.

When the ESIM card is obtained by performing configuration based on the profile sent by the configuration node, in an implementation of generating the password of the ESIM card, the password may be obtained by performing a preset algorithm on the profile. For example, the password may be obtained based on performing a hash algorithm on the profile. For example, the password may be a hash value of the profile. In this case, to ensure that the password of the ESIM card can match the configuration identifier of the ESIM card, the implementation in which the configuration node obtains the configuration identifier based on the profile may be the same as the implementation in which the terminal obtains the password based on the profile, or the two implementations are mutually matching implementations. For example, the configuration node may use the hash value of the profile as the configuration identifier, the terminal may use the hash value of the profile as the password, and the hash algorithm used by the configuration node to generate the hash value is the same as that used by the terminal to generate the hash value. In this way, it can be ensured that the configuration identifier is the same as the password, and the configuration identifier and the password can match.

In another scenario, when the ESIM card is obtained in an invalid manner, the terminal in which the ESIM card is located cannot obtain the profile of the ESIM card, and the password of the ESIM card cannot be obtained based on an accurate profile. In this case, the password definitely cannot match the configuration identifier. The accurate profile is a profile that can be used to accurately configure the ESIM card. An illegal profile and a profile of another ESIM card are inaccurate profiles. For example, when an ESIM card is obtained by performing configuration using a profile forged by a hacker, because the forged profile is an inaccurate profile, a password generated based on the forged profile is definitely different from a password generated based on a profile for configuring the ESIM card. In this case, a configuration identifier generated based on the profile for configuring the ESIM card definitely does not match the password generated based on the forged profile. Therefore, obtaining the configuration identifier and the password based on the profile can effectively ensure a matching degree and security of the configuration identifier and the password.

Step 307: The terminal sends the registration request for the ESIM card to the registration node, and provides the card identifier and the password of the ESIM card for the registration node.

When the terminal requires the registration node to register the ESIM card, the terminal may send the registration request to the registration node, to request the registration node to register the ESIM card. In an implementation, the registration request may carry the card identifier and the password of the ESIM card, so that the registration node performs authentication on the ESIM card based on the card identifier and the password. Alternatively, the registration request may not carry the password of the ESIM card. In this case, the password of the ESIM card may be provided for the registration node in another manner. For example, after sending the registration request to the registration node, the terminal may further separately send the password of the ESIM card to the registration node.

Step 308: The registration node determines, based on the registration request for the ESIM card, whether the configuration identifier and the password of the ESIM card match, and the registration node registers the ESIM card when the configuration identifier matches the password.

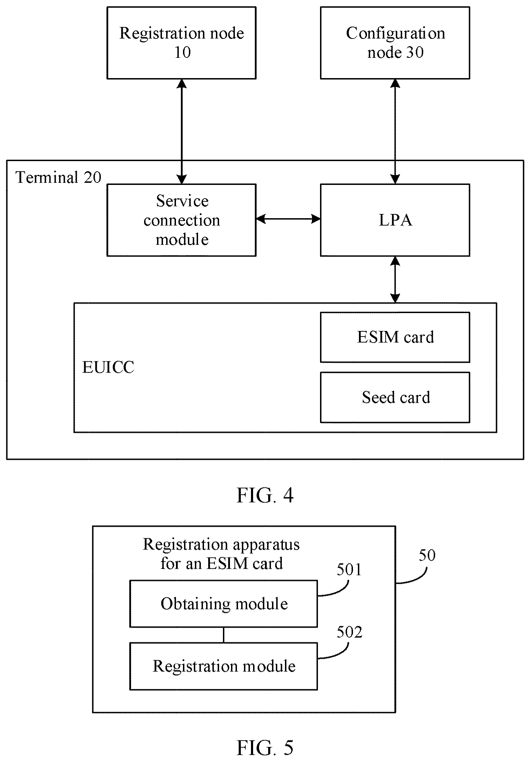

After receiving the registration request for the ESIM card, the registration node may obtain the configuration identifier and the password of the ESIM card based on the registration request, then determine whether the configuration identifier and the password match, and when the configuration identifier and the password match, determine that authentication on the ESIM card succeeds, and register the ESIM card. The configuration identifier can uniquely identify the ESIM card, and the configuration identifier has high security. Therefore, when authentication is performed on the ESIM card based on the configuration identifier, authentication security can be ensured, to ensure registration security of the ESIM card, and prevent a device from being forged, and password-free registration of the terminal can be further implemented. In an implementation, as shown in FIG. 4, communication between a registration node 10 and the ESIM card may be implemented via an LPA. In addition, as shown in FIG. 4, a service connection module may be further configured in a terminal 20. The service connection module is configured to implement communication between the ESIM card and another component. For example, communication between the registration node 10 and the ESIM card may be implemented via the LPA and the service connection module.

In conclusion, in the registration method for an ESIM provided in this embodiment of this application, the registration node separately obtains the configuration identifier of the ESIM card and the password of the ESIM card, and then determines whether the configuration identifier matches the password. When the configuration identifier matches the password, the registration node determines that authentication on the ESIM card succeeds, and registers the ESIM card. The ESIM card is obtained by performing configuration based on the profile, and different ESIM cards have different profiles. Therefore, the configuration identifier obtained based on the profile can uniquely identify the ESIM card. In addition, a probability that the profile is leaked is low. Therefore, when the configuration identifier is obtained based on the profile of the ESIM card, security of the configuration identifier can be effectively ensured. The configuration identifier can uniquely identify the ESIM card, and the configuration identifier has high security. Therefore, when authentication is performed on the ESIM card based on the configuration identifier, authentication security can be ensured, to ensure registration security of the ESIM card, and prevent the device from being forged. In addition, because the password is generated in the use process of the terminal, the terminal manufacturer does not need to burn the password for the terminal. This reduces difficulty of producing the terminal by the terminal manufacturer, and eliminates a security risk existing in burning of the password by the terminal manufacturer.

It should be noted that a sequence of steps of the registration method for an ESIM card provided in this embodiment of this application may be appropriately adjusted, or the steps may be correspondingly added or deleted as required. Any variation method readily figured out by a person skilled in the art within the technical scope disclosed in this application shall fall within the protection scope of this application. Therefore, details are not described herein.

The foregoing describes the registration method for an ESIM card in embodiments of this application. Embodiments of this application further provide a registration apparatus for an ESIM card, corresponding to the foregoing method. The ESIM card is configured in a terminal. The apparatus is used in a registration node. FIG. 5 is a diagram of a structure of the registration apparatus for an ESIM card according to an embodiment of this application. Based on the following plurality of modules shown in FIG. 5, the registration apparatus for an ESIM card shown in FIG. 5 can perform all or some operations performed by the registration node shown in FIG. 3. It should be understood that the apparatus may include more additional modules than the shown modules or a part of the shown modules may be omitted. This is not limited in embodiments of this application. Optionally, the registration apparatus for an ESIM card may be configured on a cloud platform. As shown in FIG. 5, the registration apparatus 50 for an ESIM card may include:
an obtaining module 501, configured to obtain a configuration identifier of the ESIM card, where the configuration identifier is obtained based on a profile of the ESIM card, the ESIM card is obtained by performing configuration based on the profile, and
the obtaining module 501 is further configured to obtain a password of the ESIM card, where the password is generated in a use process of the terminal; and
a registration module 502, configured to register the ESIM card when the configuration identifier matches the password.

Optionally, the obtaining module 501 is specifically configured to obtain the configuration identifier from a configuration node, where the configuration node is configured to provide the profile for the ESIM card.

Optionally, the obtaining module 501 is specifically configured to: receive a registration request sent by the terminal, and obtain the password carried in the registration request.

Optionally, the terminal is an internet of things device, and the registration node is deployed in an internet of things management system.

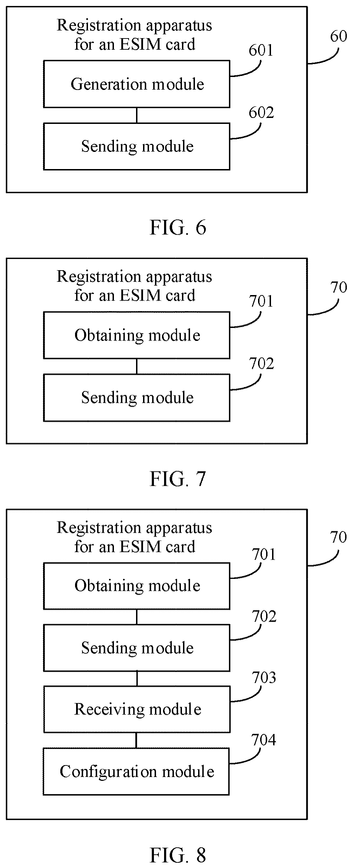

An embodiment of this application further provides a registration apparatus for an ESIM card. The ESIM card is configured in a terminal. The apparatus is used in a configuration node. FIG. 6 is a diagram of a structure of the registration apparatus for an ESIM card according to an embodiment of this application. Based on the following plurality of modules shown in FIG. 6, the registration apparatus for an ESIM card shown in FIG. 6 can perform all or some operations performed by the configuration node shown in FIG. 3. It should be understood that the apparatus may include more additional modules than the shown modules or a part of the shown modules may be omitted. This is not limited in embodiments of this application. Optionally, the registration apparatus for an ESIM card may be configured on a cloud platform. As shown in FIG. 6, the registration apparatus 60 for an ESIM card may include:
a generation module 601, configured to generate a configuration identifier of the ESIM card based on a profile of the ESIM card, where the ESIM card is obtained by performing configuration based on the profile; and
a sending module 602, configured to provide the configuration identifier for a registration node.

Optionally, the configuration identifier is obtained based on a hash value of the profile.

Optionally, the sending module 602 is further configured to send the profile of the ESIM card to the terminal.

Optionally, the terminal is an internet of things device, and the configuration node is deployed in an internet of things management system or an ESIM card management system.

An embodiment of this application further provides a registration apparatus for an ESIM card. The ESIM card is configured in a terminal. The apparatus is used in the terminal. FIG. 7 and FIG. 8 are diagrams of a structure of the registration apparatus for an ESIM card according to an embodiment of this application. Based on the following plurality of modules shown in FIG. 7 and FIG. 8, the registration apparatus for an ESIM card shown in FIG. 7 and FIG. 8 can perform all or some operations performed by the terminal shown in FIG. 3. It should be understood that the apparatus may include more additional modules than the shown modules or a part of the shown modules may be omitted. This is not limited in embodiments of this application. Optionally, the registration apparatus for an ESIM card may be configured on a cloud platform. As shown in FIG. 7, the registration apparatus 70 for an ESIM card may include:
an obtaining module 701, configured to obtain a password of the ESIM card, where the password is generated in a use process of the terminal; and
a sending module 702, configured to provide the password for a registration node.

Optionally, as shown in FIG. 8, the apparatus further includes: a receiving module 703, configured to receive a profile sent by a configuration node; and a configuration module 704, configured to perform, based on the profile, configuration to obtain the ESIM card.

Optionally, the password is obtained based on the profile.

Optionally, the password is obtained based on a hash value of the profile.

Optionally, the terminal is an internet of things device.

In conclusion, in the registration apparatus for an ESIM card provided in embodiments of this application, the obtaining module separately obtains the configuration identifier of the ESIM card and the password of the ESIM card, and then determines whether the configuration identifier matches the password. When the configuration identifier matches the password, the registration module determines that authentication on the ESIM card succeeds, and registers the ESIM card. The ESIM card is obtained by performing configuration based on the profile, and different ESIM cards have different profiles. Therefore, the configuration identifier obtained based on the profile can uniquely identify the ESIM card. In addition, a probability that the profile is leaked is low. Therefore, when the configuration identifier is obtained based on the profile of the ESIM card, security of the configuration identifier can be effectively ensured. The configuration identifier can uniquely identify the ESIM card, and the configuration identifier has high security. Therefore, when authentication is performed on the ESIM card based on the configuration identifier, authentication security can be ensured, to ensure registration security of the ESIM card, and prevent a device from being forged. In addition, because the password is generated in the use process of the terminal, a terminal manufacturer does not need to burn the password for the terminal. This reduces difficulty of producing the terminal by the terminal manufacturer, and eliminates a security risk existing in burning of the password by the terminal manufacturer.

The obtaining module 501, the registration module 502, the generation module 601, the sending module 602, the obtaining module 701, the sending module 702, the receiving module 703, and the configuration module 704 may all be implemented using software, or may be implemented using hardware. For example, the following uses the obtaining module 501 as an example to describe an implementation of the obtaining module 501. Similarly, for implementations of the registration module 502, the generation module 601, the sending module 602, the obtaining module 701, the sending module 702, the receiving module 703, and the configuration module 704, refer to the implementation of the obtaining module 501.

A module is used as an example of a software functional unit, and the obtaining module 501 may include code run on a computing instance. The computing instance may include at least one of a physical host (computing device), a virtual machine, and a container. Further, there may be one or more computing instances. For example, the obtaining module 501 may include code run on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed on a same virtual private cloud (virtual private cloud, VPC), or may be distributed on a plurality of VPCs. Generally, one VPC is set in one region. A communication gateway needs to be set in each VPC for communication between two VPCs in a same region or between VPCs in different regions. An interconnection between the VPCs is implemented through the communication gateway.

A module is used as an example of a hardware functional unit, and the obtaining module 501 may include at least one computing device, for example, a server. Alternatively, the obtaining module 501 may be a device implemented using an application-specific integrated circuit (application-specific integrated circuit, ASIC) or a programmable logic device (programmable logic device, PLD), or the like. The PLD may be a complex programmable logic device (complex programmable logic device, CPLD), a field-programmable gate array (field-programmable gate array, FPGA), generic array logic (generic array logic, GAL), or any combination thereof.

A plurality of computing devices included in the obtaining module 501 may be distributed in a same region, or may be distributed in different regions. The plurality of computing devices included in the obtaining module 501 may be distributed in a same AZ, or may be distributed in different AZs. Similarly, the plurality of computing devices included in the obtaining module 501 may be distributed on a same VPC, or may be distributed on a plurality of VPCs. The plurality of computing devices may be any combination of computing devices such as a server, an ASIC, a PLD, a CPLD, an FPGA, and GAL.

It should be noted that, in another embodiment, any one of the obtaining module 501, the registration module 502, the generation module 601, the sending module 602, the obtaining module 701, the sending module 702, the receiving module 703, and the configuration module 704 may be configured to perform any step in the registration method for an ESIM card. Steps implemented by the obtaining module 501, the registration module 502, the generation module 601, the sending module 602, the obtaining module 701, the sending module 702, the receiving module 703, and the configuration module 704 may be specified as required. The obtaining module 501, the registration module 502, the generation module 601, the sending module 602, the obtaining module 701, the sending module 702, the receiving module 703, and the configuration module 704 respectively implement different steps in the registration method for an ESIM card, to implement all functions of the registration apparatus for an ESIM card.

It can be clearly understood by a person skilled in the art that, for the purpose of convenient and brief description, for detailed working processes of the foregoing apparatus and modules, refer to corresponding content in the foregoing method embodiments. Details are not described herein again.

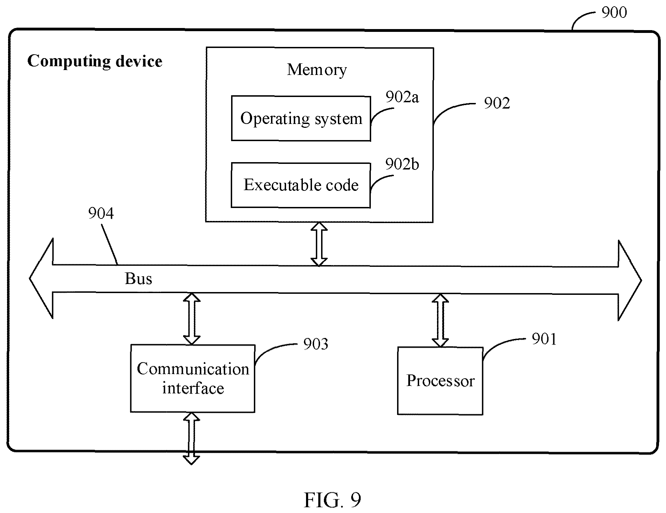

An embodiment of this application provides a computing device. The computing device is configured to implement some or all functions performed by any one of the registration node, the configuration node, and the terminal in the registration method for an ESIM card provided in embodiments of this application. FIG. 9 is a diagram of a structure of a computing device according to an embodiment of this application. As shown in FIG. 9, the computing device 900 includes a processor 901, a memory 902, a communication interface 903, and a bus 904. The processor 901, the memory 902, and the communication interface 903 are communicatively connected to each other through the bus 904.

The processor 901 may include a general-purpose processor and/or a dedicated hardware chip. The general-purpose processor may include a central processing unit (central processing unit, CPU), a microprocessor, or a graphics processing unit (graphics processing unit, GPU). For example, the CPU is a single-core processor (single-CPU), or a multi-core processor (multi-CPU). The dedicated hardware chip is a hardware module with high-performance processing. The dedicated hardware chip includes at least one of a digital signal processor, an application-specific integrated circuit (application-specific integrated circuit, ASIC), a field-programmable gate array (field-programmable gate array, FPGA), or a network processor (network processor, NP). The processor 901 may alternatively be an integrated circuit chip and has a signal processing capability. In an implementation process, some or all functions of the registration method for an ESIM card in this application may be implemented using an integrated logic circuit of hardware in the processor 901 or instructions in a form of software.

The memory 902 is configured to store a computer program. The computer program includes an operating system 902a and executable code (namely, program instructions) 902b. For example, the memory 902 is a read-only memory, another type of static storage device that can store static information and instructions, a random access memory, another type of dynamic storage device that can store information and instructions, an electrically erasable programmable read-only memory, a compact disc read-only memory, another optical disk storage, an optical disc storage (including a compact disc, a laser disc, an optical disc, a digital versatile disc, a Blu-ray disc, or the like), a magnetic disk storage medium, another magnetic storage device, or any other medium that can be used to carry or store expected executable code in a form of instructions or a data structure and that can be accessed by a computer, but is not limited thereto. For example, the memory 902 is configured to store an egress queue. For example, the memory 902 exists independently, and is connected to the processor 901 through the bus 904. Alternatively, the memory 902 and the processor 901 are integrated together. The memory 902 may store executable code. When the executable code stored in the memory 902 is executed by the processor 901, the processor 901 is configured to perform some or all functions of the registration method for an ESIM card provided in embodiments of this application. For an implementation in which the processor 901 performs the process, correspondingly refer to related descriptions in the foregoing embodiments. The memory 902 may further include a software module, data, and the like that are required by another running process, for example, an operating system.

The communication interface 903 is but is not limited to a transceiver module, for example, a transceiver, to implement communication with another device or a communication network. For example, the communication interface 903 may be any one or any combination of the following devices: devices having network access functions, such as a network interface (for example, an ethernet interface) and a wireless network interface card.

The bus 904 is any type of communication bus configured to implement an interconnection between internal devices (for example, the memory 902, the processor 901, and the communication interface 903) in the computing device, for example, a system bus. In this embodiment of this application, an example in which the foregoing devices inside the computing device are interconnected through the bus 904 is used for description. Optionally, the foregoing devices inside the computing device 900 may be communicatively connected to each other in another connection manner other than the bus 904. For example, the foregoing devices inside the computing device 900 are interconnected through an internal logical interface.

It should be noted that the foregoing plurality of devices may be respectively disposed on chips independent of each other, or at least some or all of the devices may be disposed on a same chip. Whether the devices are independently disposed on different chips or integrated and disposed on one or more chips usually depends on a requirement of a product design. Specific implementations of the foregoing devices are not limited in embodiments of this application. Descriptions of procedures corresponding to the foregoing accompanying drawings have respective focuses. For a part that is not described in detail in a procedure, refer to related descriptions of another procedure.

The foregoing embodiments may be all or partially implemented using software, hardware, firmware, or any combination thereof. When being implemented using software, the foregoing embodiments may be all or partially implemented in a form of a computer program product. The computer program product that provides a program development platform includes one or more computer instructions. When these computer program instructions are loaded and executed on a computing device, all or some of functions of the registration method for an ESIM card provided in embodiments of this application are implemented.

In addition, the computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium stores computer program instructions that provide a program development platform.

An embodiment of this application further provides a computing device cluster. The computing device cluster includes at least one computing device. The computing device may be a server, for example, a central server, an edge server, or a local server in a local data center. In some embodiments, the computing device may alternatively be a terminal like a desktop computer, a notebook computer, or a smartphone.

Optionally, for a structure of the at least one computing device included in the computing device cluster, refer to a computing device 900 shown in FIG. 9. Memories 902 in one or more computing devices 900 in the computing device cluster may store same instructions used to perform any registration method for an ESIM card provided in embodiments of this application.

In some possible implementations, the memories 902 in the one or more computing devices 900 in the computing device cluster may alternatively respectively store some instructions used to perform any registration method for an ESIM card provided in embodiments of this application. In other words, a combination of the one or more computing devices 900 may jointly execute instructions used to perform any registration method for an ESIM card provided in embodiments of this application.

It should be noted that memories 902 in different computing devices 900 in the computing device cluster may store different instructions that are respectively used to perform some functions of the registration apparatus for an ESIM card. To be specific, the instructions stored in the memories 902 in the different computing devices 900 may be used to implement functions of one or more of the foregoing modules.

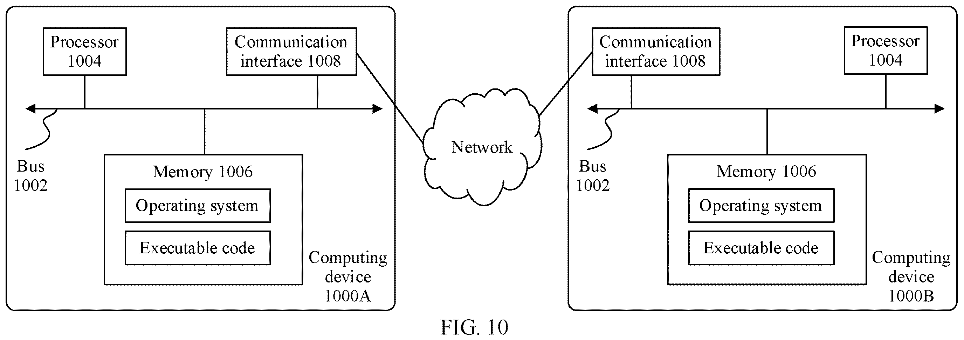

In some possible implementations, the one or more computing devices in the computing device cluster may be connected through a network. The network may be a wide area network, a local area network, or the like. FIG. 10 shows a possible implementation. As shown in FIG. 10, two computing devices 1000A and 1000B are connected to each other through a network. Specifically, each computing device is connected to the network through a communication interface in the computing device. In this possible implementation, the computing devices 1000A and 1000B each include a bus 1002, a processor 1004, a memory 1006, and a communication interface 1008.

It should be understood that a function of the computing device 1000A shown in FIG. 10 may alternatively be implemented by a plurality of computing devices 1000. Similarly, a function of the computing device 1000B may also be implemented by a plurality of computing devices 1000. In addition, a deployment manner of a module configured to implement any registration method for an ESIM card provided in embodiments of this application in the computing device may also be adjusted based on an application requirement.

An embodiment of this application further provides a computer-readable storage medium. The computer-readable storage medium is a non-volatile computer-readable storage medium. The computer-readable storage medium includes program instructions. When the program instructions are run on a computing device, the computing device is enabled to implement the registration method for an ESIM card provided in embodiments of this application.

An embodiment of this application further provides a computer program product including instructions. When the computer program product runs on a computer, the computer is enabled to implement the registration method for an ESIM card provided in embodiments of this application.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

It should be noted that information (including but not limited to user equipment information, personal information of a user, and the like), data (including but not limited to data used for analysis, stored data, displayed data, and the like), and a signal in this application are used under authorization by the user or full authorization by all parties, and collection, use, and processing of related data need to conform to related laws, regulations, and standards of related countries and regions. For example, original data, the executable code, and the like in this application are obtained under full authorization.

In embodiments of this application, the terms "first", "second", and "third" are merely used for description, but cannot be understood as an indication or implication of relative importance. The term "at least one" means one or more, and the term "a plurality of" means two or more, unless otherwise expressly limited.

The term "and/or" in this application describes only an association relationship between associated objects and indicates that three relationships may exist. For example, A and/or B may indicate the following three cases: Only A exists, both A and B exist, and only B exists. In addition, the character "/" in this specification generally indicates an "or" relationship between associated objects.

The foregoing descriptions are merely optional embodiments of this application, but are not intended to limit this application. Any modification, equivalent replacement, improvement, or the like made within the concept and principle of this application shall fall within the protection scope of this application.

## Claims

1. A registration method for an embedded subscriber identity module ESIM card, wherein the ESIM card is configured in a terminal, the method is applied to a registration node, and the method comprises:
obtaining, by the registration node, a configuration identifier of the ESIM card, wherein the configuration identifier is obtained based on a profile of the ESIM card, and the ESIM card is obtained by performing configuration based on the profile;
obtaining, by the registration node, a password of the ESIM card, wherein the password is generated in a use process of the terminal; and
registering, by the registration node, the ESIM card when the configuration identifier matches the password.

2. The method according to claim 1, wherein obtaining, by the registration node, the configuration identifier of the ESIM card comprises:
obtaining, by the registration node, the configuration identifier from a configuration node, wherein the configuration node is configured to provide the profile for the ESIM card.

3. The method according to claim 1 or 2, wherein obtaining, by the registration node, the password of the ESIM card comprises:
receiving, by the registration node, a registration request sent by the terminal, and obtaining the password carried in the registration request.

4. The method according to any one of claims 1 to 3, wherein the terminal is an internet of things device, and the registration node is deployed in an internet of things management system.

5. A registration method for an ESIM card, wherein the ESIM card is configured in a terminal, the method is applied to a configuration node, and the method comprises:
generating, by the configuration node, a configuration identifier of the ESIM card based on a profile of the ESIM card, wherein the ESIM card is obtained by performing configuration based on the profile; and
providing, by the configuration node, the configuration identifier for the registration node.

6. The method according to claim 5, wherein the configuration identifier is obtained based on a hash value of the profile.

7. The method according to claim 5 or 6, wherein before generating, by the configuration node, the configuration identifier of the ESIM card based on the profile of the ESIM card, the method further comprises:
sending, by the configuration node, the profile of the ESIM card to the terminal.

8. The method according to any one of claims 5 to 7, wherein the terminal is an internet of things device, and the registration node is deployed in an internet of things management system or an ESIM card management system.

9. A registration method for an ESIM card, wherein the ESIM card is configured in a terminal, the method is applied to the terminal, and the method comprises:
obtaining, by the terminal, a password of the ESIM card, wherein the password is generated in a use process of the terminal; and
providing, by the terminal, the password for the registration node.

10. The method according to claim 9, wherein before obtaining, by the terminal, the password of the ESIM card, the method further comprises:
receiving, by the terminal, a profile sent by the configuration node; and
performing, by the terminal based on the profile, configuration to obtain the ESIM card.

11. The method according to claim 10, wherein the password is obtained based on the profile.

12. The method according to claim 11, wherein the password is obtained based on a hash value of the profile.

13. The method according to any one of claims 9 to 12, wherein the terminal is an internet of things device.

14. A registration apparatus for an embedded subscriber identity module ESIM card, wherein the ESIM card is configured in a terminal, the apparatus is used in a registration node, and the apparatus comprises:
an obtaining module, configured to obtain a configuration identifier of the ESIM card, wherein the configuration identifier is obtained based on a profile of the ESIM card, the ESIM card is obtained by performing configuration based on the profile, and
the obtaining module is further configured to obtain a password of the ESIM card, wherein the password is generated in a use process of the terminal; and
a registration module, configured to register the ESIM card when the configuration identifier matches the password.

15. The apparatus according to claim 14, wherein the obtaining module is specifically configured to obtain the configuration identifier from a configuration node, wherein the configuration node is configured to provide the profile for the ESIM card.

16. The apparatus according to claim 14 or 15, wherein the obtaining module is specifically configured to: receive a registration request sent by the terminal, and obtain the password carried in the registration request.

17. The apparatus according to any one of claims 14 to 16, wherein the terminal is an internet of things device, and the registration node is deployed in an internet of things management system.

18. A registration apparatus for an ESIM card, wherein the ESIM card is configured in a terminal, the apparatus is used in a configuration node, and the apparatus comprises:
a generation module, configured to generate a configuration identifier of the ESIM card based on a profile of the ESIM card, wherein the ESIM card is obtained by performing configuration based on the profile; and
a sending module, configured to provide the configuration identifier for the registration node.

19. The apparatus according to claim 18, wherein the configuration identifier is obtained based on a hash value of the profile.

20. The apparatus according to claim 18 or 19, wherein the sending module is further configured to:
send the profile of the ESIM card to the terminal.

21. The apparatus according to any one of claims 18 to 20, wherein the terminal is an internet of things device, and the configuration node is deployed in an internet of things management system or an ESIM card management system.

22. A registration apparatus for an ESIM card, wherein the ESIM card is configured in a terminal, the apparatus is used in the terminal, and the apparatus comprises:
an obtaining module, configured to obtain a password of the ESIM card, wherein the password is generated in a use process of the terminal; and
a sending module, configured to provide the password for the registration node.

23. The apparatus according to claim 22, wherein the apparatus further comprises:
a receiving module, configured to receive a profile sent by the configuration node; and
a configuration module, configured to perform, based on the profile, configuration to obtain the ESIM card.

24. The apparatus according to claim 23, wherein the password is obtained based on the profile.

25. The apparatus according to claim 24, wherein the password is obtained based on a hash value of the profile.

26. The apparatus according to any one of claims 22 to 25, wherein the terminal is an internet of things device.

27. A computing device, comprising a memory and a processor, wherein the memory stores program instructions, and the processor runs the program instructions to perform the method according to any one of claims 1 to 13.

28. A computer-readable storage medium, comprising program instructions, wherein when the program instructions are run on a computing device, the computing device is enabled to perform the method according to any one of claims 1 to 13.

29. A computer program product, wherein when the computer program product runs on a computer, the computer is enabled to perform the method according to any one of claims 1 to 13.
